# EUROPÄISCHE PATENTSCHRIFT

(11) **EP 0 813 986 B1**
(45) Veröffentlichungstag und Bekanntmachung des Hinweises auf die Patenterteilung: **12.11.2003**
(21) Anmeldenummer: 97102859.2
(22) Anmeldetag: 21.02.1997
(51) Int. Cl.: B60K 31/00

(54) **Verfahren zur Abstandsregelung für ein Fahrzeug**
Method for distance control in a vehicle
Méthode de commande de distance d'un véhicule

(30) Priorität: 20.06.1996 DE 19624617
(43) Veröffentlichungstag der Anmeldung: 29.12.1997
(73) Patentinhaber: Volkswagen Aktiengesellschaft, 38436 Wolfsburg (DE)
(72) Erfinder: Bergholz, Ralf, Dr., 38108 Braunschweig (DE); Weisser, Hubert, Dr., 38165 Lehre (DE); Timm, Klaus, Prof., 21465 Wentorf (DE)
(74) Vertreter: Meyer, Enno, Dr.

(56) Entgegenhaltungen:
- DE-A- 19 509 178
- US-A- 5 189 619
- MUELLER R ET AL: "INTELLIGENT CRUISE CONTROL WITH FUZZY LOGIC" PROCEEDINGS OF THE INTELLIGENT VEHICLES SYMPOSIUM,1. Juni 1992 (1992-06-01), XP000199811
- PROTZEL ET AL: "ABSTANDSREGELUNG VON FAHRZEUGEN MIT FUZZY CONTROL, Tagungsband der 3. Dortmunder Fuzzy Tage, Reihe Informatik Aktuell" FUZZY LOGIC. THEORIE AND PRAXIS. DORDMUNDER FUZZY-TAGE,XX,XX, 1. Januar 1993 (1993-01-01), Seiten 212-221, XP002087566
- ZALILA Z ET AL: "LONGITUDINAL CONTROL OF AN AUTONOMOUS VEHICLE THROUGH A HYBRID FUZZY/CLASSICAL CONTROLLER" WESCON CONFERENCE,US,IEEE CENTER, HOES LANE,27. September 1994 (1994-09-27), Seiten 118-124, XP000532569 ISSN: 1044-6036

## Beschreibung

Die Erfindung betrifft ein Verfahren zur Abstandsregelung für ein Fahrzeug, bei dem zumindest in Abhängigkeit der momentanen Fahrgeschwindigkeit des Fahrzeuges ein Sollabstand zu einem vorausfahrenden Fahrzeug mittels einer Einrichtung zur Berechnung des Sollabstandes ermittelt wird.

In der deutschen Offenlegungsschrift DE 42 00 694 A1 ist ein Verfahren zur Geschwindigkeits- und Abstandsregelung eines Fahrzeuges beschrieben. Bei dem bekannten Verfahren wird der aktuelle Abstand sowie die momentane Geschwindigkeit erfaßt und daraus die Sollwerte für den Abstand zu dem vor dem Fahrzeug befindlichen Objekt und die Fahrgeschwindigkeit ermittelt und eingestellt. Das Problem liegt dabei darin, daß Abstandsregelung als fahrerunterstützende Systeme konzipiert werden, deren Akzeptanz durch den Fahrzeugführer davon abhängt, wie sehr das Regelverhalten seinem eigenen Fahrverhalten, insbesondere bei der Einhaltung des Abstandes zum vorausfahrenden Kraftfahrzeug, ähnelt.

Zur Lösung des Problems wird in der Veröffentlichung "Abstandsregelung von Fahrzeugen mit Fuzzy-Control", Tagungsband der 3. Dortmunder Fuzzy-Tage, Reihe Informatik Aktuell, Springer Verlag, 1993 vorgeschlagen, anstelle eines fest vorgegebenen Sollabstandes, ein Abstandsmodell zu bestimmen, das vom Fahrertyp und der Witterung abhängt. Der Fahrertyp soll dabei über eine externer Sensorik ermittelt werden, wobei eine Möglichkeit zur zuverlässigen automatischen Fahrertyperkennung nicht angegeben wird.

Müller, R., et al.: "Intelligent Cruise Control with Fuzzy Logic", Proceedings of the Intelligent Vehicles Symposium, 1. Juni 1992, XP000199811, beschreibt eine intelligente Abstandsregelung, die die Geschwindigkeit und den Abstand zu vorausfahrenden Fahrzeugen mittels eines modularen Fuzzy-Controllers steuert.

Protzel, P., et al.: "Abstandsregelung von Fahrzeugen mit Fuzzy Control, Tagungsband der 3. Dortmunder Fuzzy Tage, Reihe Informatik Aktuell", Fuzzy Logic Theorie und Praxis. Dortmunder Fuzzy-Tage, 1. Januar 1993, Seiten 212-213, XP002087566, beschreibt die Struktur einer Fuzzy-Abstandsregelung, die als System zur Fahrerunterstützung den Abstand zu einem vorausfahrenden Fahrzeug konstant hält, wobei die Regelung das menschliche Fahrverhalten nachbilden soll, um die Nutzerakzeptanz zu erhöhen.

DE-A-195 09 178 beschreibt ein Abstandsregelgerät für Fahrzeuge mit einer Abstandmeßeinrichtung und einer Geschwindigkeitsmeßeinrichtung, wobei eine Fahrermodell-Berechnungseinrichtung einen Verzögerungs- und einen Beschleunigungsabstand anhand der Fahrzeuggeschwindigkeit und des Bedienverhaltens des Fahrers berechnet, wobei eine Regeleinrichtung die errechneten Größen umsetzt.

US-A-5,189,619 beschreibt ein Al-basierendes adaptives Fahrzeugregelsystem, das die Fahrzeuggeschwindigkeit in Übereinstimmung mit der Charakteristik des Fahrers steuert, wobei u. a. der Abstand und die Relativgeschwindigkeit zu einem vorausfahrenden Fahrzeug als Eingangsgrößen dienen.

Dementsprechend liegt der Erfindung die Aufgabe zugrunde, ein verbessertes Verfahren zur Abstandsregelung basierend auf Fuzzy-Control zu schaffen, dessen Regelverhalten auf das Fahrverhalten des Fahrers so abgestimmt ist, so daß sich dessen Akzeptanz durch den Fahrzeugführer weiter erhöht.

Die Aufgabe wird durch ein Verfahren nach Anspruch 1 und eine Vorrichtung nach Anspruch 11 gelöst. Bevorzugte Ausführungsformen der Erfindung sind Gegenstand der Unteransprüche.

Gemäß der Erfindung wird das Übertragungsverhalten der Einrichtung zur Berechnung des Sollabstandes an das individuelle Fahrverhalten des jeweiligen Fahrzeugführers adaptiert. Die Adaption erfolgt dabei derart, daß die individuelle Folgezeit des Fahrzeugführers zum vorausfahrenden Fahrzeug über die Ermittlung des Sollabstandes eingehalten wird. Dies erfolgt vorzugsweise während eines Operatorbetriebes, das heißt während der Bedienung durch den Fahrzeugführer, an dessen Fahrweise die Sollabstandsermittlung angepaßt werden soll.

Die Erfindung berücksichtigt den Umstand, daß jeder Fahrzeugführer je nach Typ zum vorausfahrenden Fahrzeug geschwindigkeitsabhängig einen anderen Abstand hält. Ein sportlicher Fahrer wird die ihm gegebenen Grenzen eher voll ausnutzen, also den Abstand zum vorausfahrenden Fahrzeug so klein wie möglich halten. Ein defensiv fahrender Fahrzeugführer wird eher einen größeren Abstand wählen.

Dabei stellt die Einrichtung zur Berechnung des Sollabstandes einen Fuzzy-Regler mit mindestens zwei Eingangsgrößen, nämlich der momentanen Fahrgeschwindigkeit und mindestens einer weiteren Eingangsgröße, beispielsweise den vorherrschenden Reibwert oder eine Größe für die momentanen Sichtverhältnisse, und dem Sollabstand dar, welcher Eingangs-Zugehörigkeitsfunktionen, mit denen Wahrheitswerte linguistischer Werte für die Eingangsgrößen ermittelt werden, ein Regelwerk, in welchem aus den Wahrheitswerten für die Eingangsgrößen Wahrheitswerte für den Sollabstand bestimmt werden, und eine Ausgangs-Zugehörigkeitsfunktion aufweist, mit welcher aus den Wahrheitswerten des Sollabstandes der einzuregelnde Sollabstand bestimmt wird.

Weiterhin werden in einem ersten Schritt Wertebereiche für die Fahrgeschwindigkeit und die weiteren Eingangsgrößen festgelegt, dabei wird bei der Adaption eines bestehenden Fuzzy-Reglers auf den von den Eingangs-Zugehörigkeitsfunktionen abgedeckten Wertebereiche zurückgegriffen. In einem zweiten Schritt wird über dem ermittelten Werfebereich für die Eingangsgrößen eine Anzahl von Klassen festgelegt. Diese Festlegung kann in der Lage oder der Anzahl beliebig erfolgen, sie kann sich jedoch auch an die Lage und/oder Anzahl der bestehenden Eingangs-Sets anlehnen. Danach werden in einer Lernphase datensatzweise Wertekombinationen der Eingangsgrößen und des eingehaltenen Abstandes verarbeitet. Zur Verkürzung der Lemphase können die Wertekombinationen vorselektiert werden, so daß für die Regelung nicht maßgebliche Meßdaten bei der Adaption nicht zur Anwendung kommen. In Abhängigkeit dieser erfaßten Wertekombinationen werden in einem weiteren Schritt die im zweiten Schritt festgelegten Klassen verändert, entfernt und/oder neue Klassen erzeugt. Nach Abschluß der Klassenadaption werden die angepaßten Zugehörigkeitsfunktionen und die Regeln des Fuzzy-Reglers erstellt.

Während der Adaption des Fuzzy-Reglers wird bei der Festlegung der Klassen im zweiten Verfahrensschritt auf die bereits vorhandenen Eingangs-Zugehörigkeitsfunktionen sowohl der Fahrgeschwindigkeit als auch der weiteren Eingangsgrößen zurückgegriffen.

Mit der Festlegung der Klassen über den Wertebereich der Eingangsgrößen werden gleichzeitig Schnittstellen eines einzuhaltenden Abstandes der Klassen im Kennfeld gebildet, welche einmal die Regeln des Fuzzy-Reglers als auch die Sets der Ausgangs-Zugehörigkeitsfunktion bilden.

Des weiteren kann vorgesehen werden, daß für bestimmte Bereiche der Eingangsgrößen ein Wert des Abstandes festgelegt wird, der auch bei der Adaption der neuen Zugehörigkeitsfunktionen konstant bleibt.

Eine Ausbildung der Erfindung besagt, daß im Wertebereich der Eingangsgrößen um die Klassen Bereiche festgelegt werden, in denen keine neuen Klassen gebildet werden, die ausgewerteten Wertekombinationen der Eingangsgrößen und des Abstandes, die einen der Bereiche, jedoch keine der Klassen treffen, auf die benachbarten Klassen entsprechend einer Wichtung verteilt werden und die diese Klassen umgebenden Bereiche entsprechend der so erzeugten Treffer von Wertekombinationen in ihrer Breite verändert werden. Damit entstehen freie Bereiche, in welchen bei Eintreffen einer Wertekombination eine neue Klasse gebildet wird. Nach der Erzeugung einer neuen Klasse wird gemäß einer bevorzugten Ausbildung eine bestehende Klasse entfernt, so daß die Anzahl der Klassen konstant bleibt. Bei der Entscheidung, welche Klasse entfernt wird, können die unterschiedlichsten Faktoren eine Rolle spielen, beispielsweise die Trefferquote in einer Klasse durch bereits erfaßte Wertekombinationen. Bei der Entfernung einer Klasse werden die ihm bereits zugeordneten Wertekombinationen der Eingangsgrößen und des Abstandswertes (Treffer) auf die benachbarten Klassen nach einer Wichtung verteilt, vorzugsweise im Verhältnis ihres Abstandes über den Wertebereich der Eingangsgrößen zu der zu entfernenden Klasse. Gegebenenfalls werden außerdem die benachbarten Klassen entsprechend der ihnen zugeordneten Wertekombinationen verändert.

Für die Erzeugung der neuen Sets der Eingangs-Zugehörigkeitsfunktionen aufgrund der neu gebildeten Klassen bildet jede Klasse vorzugsweise mindestens eine Stützstelle einer Eingangs-Zugehörigkeitsfunktion. Für das erfindungsgemäße Verfahren ist nicht notwendigerweise erforderlich, den gesamten Wertebereich der Eingangsgrößen durch erfaßte Wertekombinationen der Eingangsgrößen und der Ausgangsgröße abzudecken. Für solche Wertebereiche sowie Wertebereiche mit Klassen extrem herausragenden Abstandswerten im Schnittpunkt mit Klassen anderer Eingangsgrößen kann eine lokale und/oder globale Interpolation durchgeführt werden.

Nachfolgend wird die Erfindung anhand eines Ausführungsbeispiels näher beschrieben. Die zugehörigen Zeichnungen zeigen:
- Figur 1: ein Blockschaltbild eines Fuzzy-Reglers,
- Figur 2: einen schematischen Aufbau des Fuzzy-Reglers und
- Figur 3 - 6: eine Darstellung des erfindungsgemäßen Verfahrens zum Entwurf eines Fuzzy-Reglers.

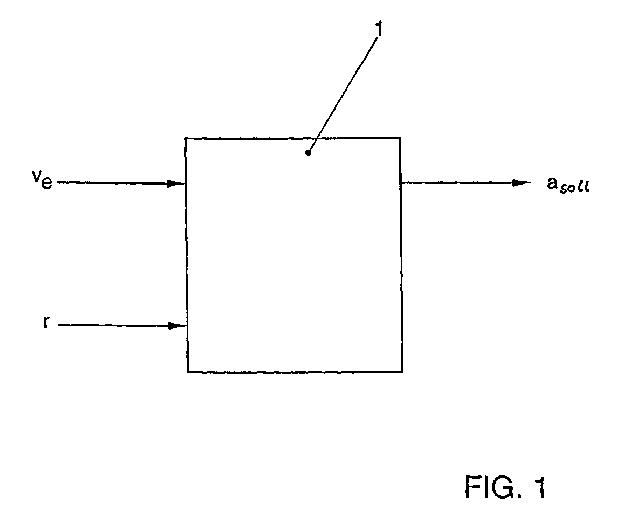

Das erfindungsgemäße Verfahren wird anhand eines Fuzzy-Reglers 1 (Figur 1) für die Einhaltung des Sollabstandes aₛₒₗₗ zu einem vorausfahrenden Kraftfahrzeug erläutert. Dabei sollen die Eigengeschwindigkeit vₑ und der vorherrschende Reibwert r die Eingangsgrößen des Fuzzy-Reglers und der einzuhaltende Sollabstand aₛₒₗₗ die Ausgangsgröße darstellen. Der Sollabstand aₛₒₗₗ hängt neben den physikalischen Größen Eigengeschwindigkeit vₑ und Reibwert r der Straße auch stark von der Fahrstrategie des jeweiligen Fahrzeugführers ab. Deshalb ist es für die Akzeptanz einer Abstandsregelung also von Wichtigkeit, daß der Fuzzy-Regler 1 auf den jeweiligen Fahrer des Kraftfahrzeuges eingestellt werden kann.

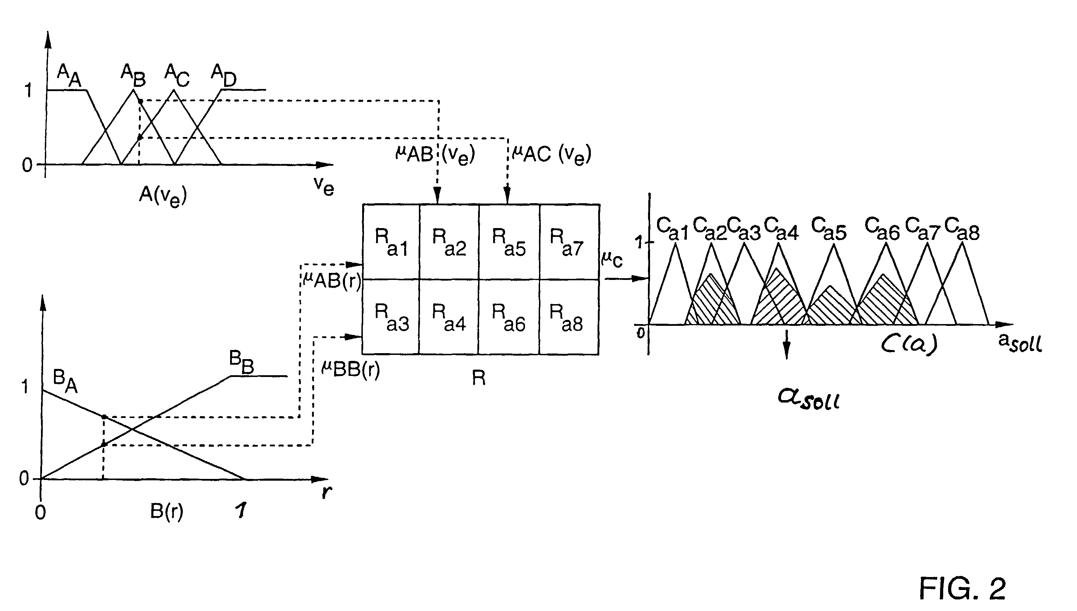

Figur 2 zeigt den Aufbau eines solchen Fuzzy-Reglers 1, der aus den Eingangs-Zugehörigkeitsfunktionen A(vₑ) und B(r), dem Regelwerk R und den Ausgangs-Zugehörigkeitsfunktionen C(a) besteht. Mittels der Eingangs-Zugehörigkeitsfunktionen A(vₑ) und B(r) werden die gemessenen Eingangsgrößen, die Fahrgeschwindigkeit vₑ und der Reibwert r, fuzzifiziert, d. h. es werden Wahrheitswerte µ_{AB}(vₑ) und µ_{AC}(vₑ) sowie µ_{BA}(r) und µ_{BB}(r) gebildet. Im Regelwerk R werden die Wahrheitswerte µ_{AB}(vₑ), µ_{AC}(vₑ), µ_{BA}(r) und µ_{BB}(r) über die Regeln Rₐ₁ - Rₐ₈ verknüpft und so Wahrheitswerte µ_{c} für den Sollabstand aₛₒₗₗ gebildet, aus denen mittels der Ausgangs-Zugehörigkeitsfunktion C(a) Werte der Ausgangsgröße aₛₒₗₗ gebildet werden.

Im Gegensatz zu einer üblichen Ausgangs-Zugehörigkeitsfunktion weist nach dem Ausführungsbeispiel die Ausgangs-Zugehörigkeitsfunktion C(a) eine Anzahl von Fuzzy-Sets Cₐ₁ - Cₐ₈ auf, die der Anzahl der Regeln Rₐ₁ - Rₐ₈ entsprechen kann, wobei die Breite aller Fuzzy-Sets konstant ist und ihre Stützstelle (Spitze) durch den Abstand einer Regel gebildet wird. Der Wert des Sollabstandes aₛₒₗₗ wird über übliche Schwerpunktbildung ermittelt.

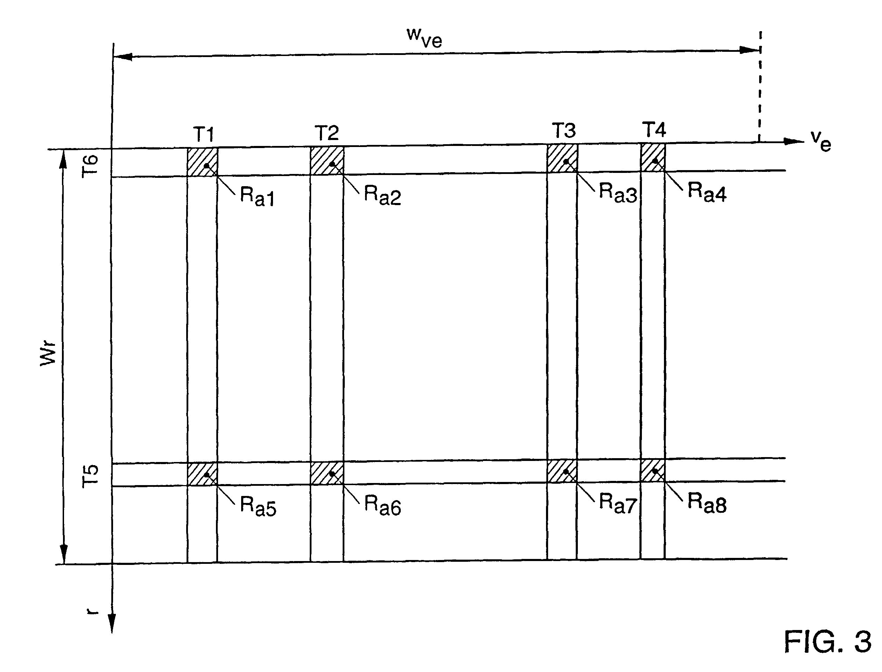

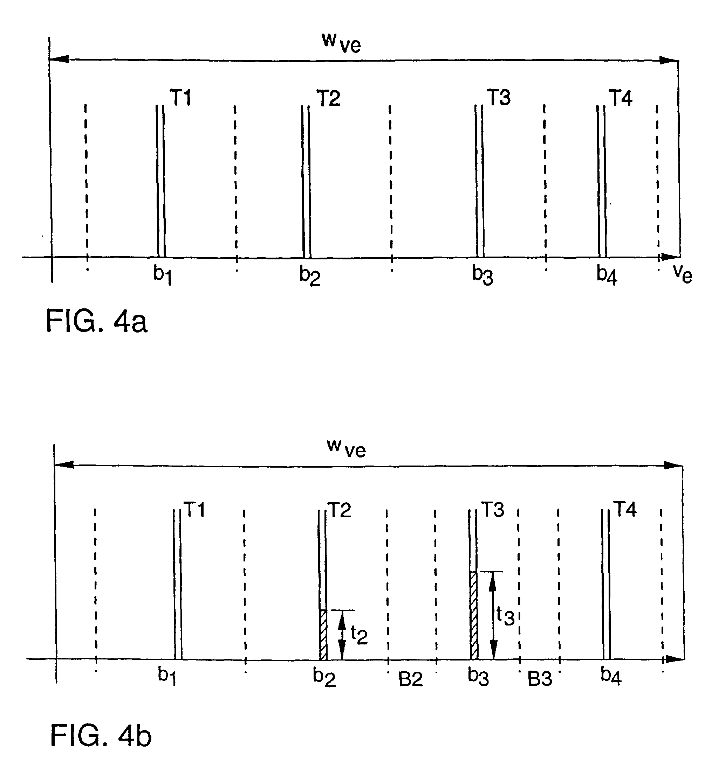

Die Figuren 3 bis 6 zeigen ein Beispiel des Entwurfes des Fuzzy-Reglers 1 anhand der Fahrgeschwindigkeit vₑ und des vorherrschenden Reibwertes r. Wie in Fig. 3 gezeigt, wird nach Festlegung der Eingangsgrößen vₑ, r des Fuzzy-Reglers ihr Wertebereich wᵥₑ, wᵣ bestimmt. Bei der Fahrgeschwindigkeit vₑ wird er durch den möglichen Fahrgeschwindigkeitsbereich des jeweiligen Kraftfahrzeuges bestimmt, beim Reibwert r liegt er zwischen 0 und 1. Danach werden über den Wertebereich wᵥₑ Klassen T1 bis T4 und über den Wertebereich wᵣ die Klassen T5 und T6 beliebig festgelegt, deren Anzahl mit der vorgesehen Anzahl von Eingangs-Zugehörigkeitsfunktionen A(vₑ), B(r) übereinstimmt (Figur 2). Dabei kann bereits Expertenwissen einfließen, indem die Klassen T1 bis T6 an Stellen mit einer entscheidenden Aussage über das zukünftige Systemverhalten gelegt werden. Die Schnittpunkte Rₐ₁ - Rₐ₈ eines bestimmten Abstandswertes a der Klassen T1 - T4 der Fahrgeschwindigkeit vₑ mit den Klassen T5, T6 des Reibwertes r bilden dabei erste Regeln des Fuzzy-Reglers sowie die Stützstellen der Sets der Ausgangs-Zugehörigkeitsfunktion, die jedoch durch die beliebige Anordnung der Klassen nicht realistisch sind. Des weiteren wird für die Anfangsbereiche der Wertebereiche wᵥₑ und wᵣ ein nicht veränderlicher Wert für den Sollabstand aₛₒₗₗ zum vorausfahrenden Kraftfahrzeug bestimmt. Dies ist ein Wert der während der Fahrt eines Kraftfahrzeuges nicht unterschritten wird. Während der Lernphase des Fuzzy-Reglers, d. h. während der manuellen Fahrt des Kraftfahrzeuges durch einen Fahrzeugführer, werden Wertekombinationen der Fahrgeschwindigkeit vₑ, des vorherrschenden Reibwertes r und des eingehaltenen Abstandswertes a datensatzweise aufgenommen und ermittelt, ob diese Wertekombinationen eine der Klassen T1 bis T4; T5, T6 treffen. Dabei kann vor der Verwendung der eingehenden Wertekombination vₑ, r, a eine Selektierung erfolgen, so daß in bestimmten Fahrsituationen (z. B. Überholvorgang) auftretende Wertekombinationen nicht für die Adaption verwendet werden. Entsprechend der eingehenden Wertekombinationen werden die Klassen verändert, entfernt und/oder neue Klassen gebildet. Eine Möglichkeit, wie Klassen gebildet werden, ist in Fig. 4 anhand der Eingangsgröße vₑ dargestellt.

Wie auch schon in Fig. 3 gezeigt, werden in einem ersten Schritt über dem Wertebereich wᵥₑ der Fahrgeschwindigkeit Klassen T1 - T4 beliebig festgelegt. Um diese Klassen werden Bereiche b₁ - b4 gebildet, in denen beim Eintreffen von Wertekombinationen vₑ, r, a in der Lemphase keine neuen Klassen gebildet werden dürfen. Die eintreffenden Wertekombinationen werden jedoch auf die benachbarten Klassen (bsp. T2 und T3) entsprechend einer Wichtung verteilt. Entsprechend der so erzeugten Trefferquote t₂, t₃ werden die die Klassen T2, T3 umgebende Bereiche b₂, b₃ verändert, so daß freie Bereiche B2, B3 entstehen, in denen bei Eintreffen einer Wertekombination neue Klassen gebildet werden. Vorteilhafterweise wird bei Bildung einer neuen Klasse eine bestehende Klasse entfernt. Bei der Entscheidung, welche Klasse entfernt wird, spielt beispielsweise die Anzahl der Treffer durch die Wertekombinationen eine Rolle. Bei der Entfernung einer Klasse werden die ihr bereits zugeordneten Informationen (Trefferquote) auf die benachbarten Klassen im Verhältnis ihres Abstandes im Wertebereich wᵥₑ, wᵣ zu der entfernten Klasse verteilt und die benachbarten Klassen entsprechend der ihnen zugeordneten Informationen verändert.

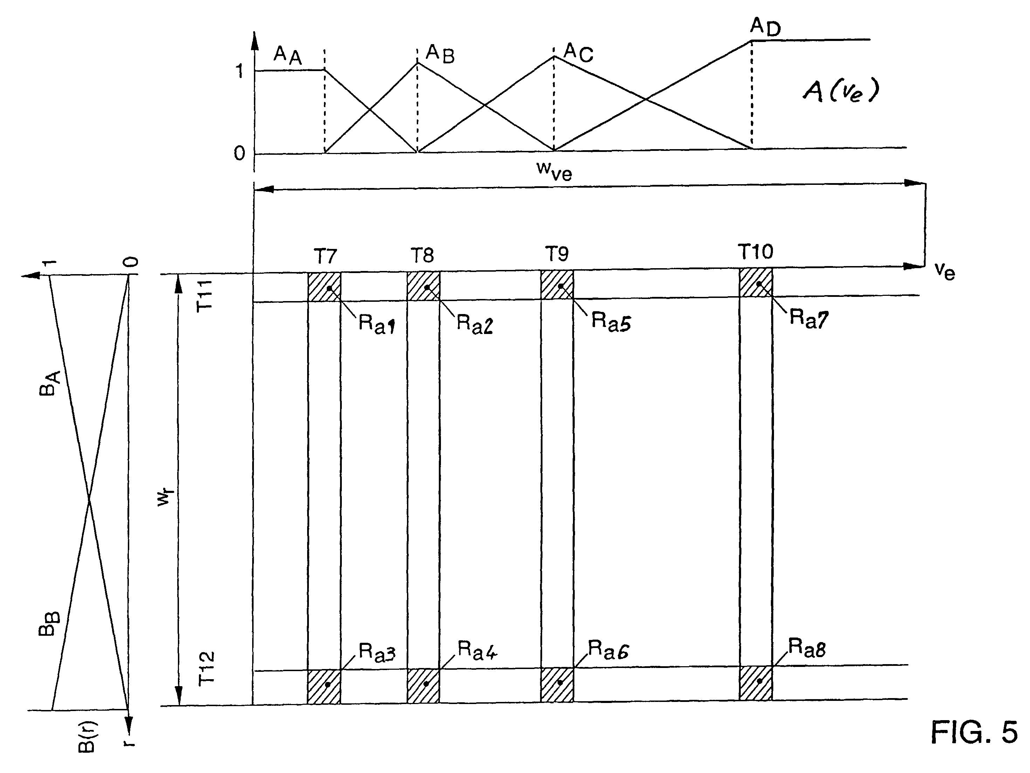

Figur 5 zeigt ein Beispiel der aufgrund der während der Lernphase erfaßten Wertekombinationen vₑ, r, a gebildeten neuen Klassen T7 - T10 über den Wertebereich der Fahrgeschwindigkeit vₑ und der Klassen T11, T12 über den Wertebereich des Reibwertes r. Aufgrund der neu gebildeten Klassen T7 - T10 werden die Sets A_{A} - A_{D} der Eingangs-Zugehörigkeitsfunktion A(vₑ) für die Fahrgeschwindigkeit vₑ und aufgrund der Klassen T11, T12 werden die Sets B_{A}, B_{B} der Eingangs-Zugehörigkeitsfunktion B(r) für den Reibwert r gebildet, wobei jede Klasse mindestens eine Stützstelle eines Sets bildet.

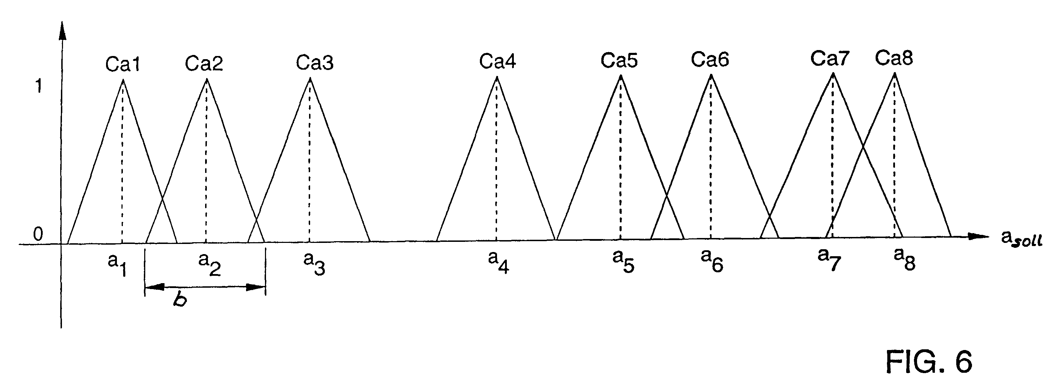

Die Schnittpunkte Rₐ₁ - Rₐ₈ eines Abstandswertes a₁ - a₈ der Klassen T7 - T10 mit den Klassen T11, T12 ergeben neben den Regeln des Fuzzy-Reglers gleichzeitig die Stützstellen der Sets Cₐ₁ - Cₐ₈ der Ausgangs-Zugehörigkeitsfunktion C(a) über die ihnen zugeordneten Werte a₁ - a₈ des Abstandswertes a, wobei auch hier die Sets grundsätzlich die gleiche Breite b aufweisen. (Fig. 6)

### BEZUGSZEICHENLISTE

- 1: Fuzzy-Regler
- aₛₒₗₗ: Sollabstand
- vₑ: Eingangsgröße, Fahrgeschwindigkeit
- r: Eingangsgröße, Reibwert
- A(vₑ): Eingangs-Zugehörigkeitsfunktion
- B(r): Eingangs-Zugehörigkeitsfunktion
- R: Regelwerk
- C(a): Ausgangs-Zugehörigkeitsfunktion
- µ_{AB}(vₑ): Wahrheitswert
- µ_{AC}(vₑ): Wahrheitswert
- µ_{BA}(r): Wahrheitswert
- µ_{BB}(r): Wahrheitswert
- µ_{c}(a): Wahrheitswert
- wᵥₑ, wᵣ: Wertebereich der Eingangsgröße
- T1 - T4; T5, T6: festgelegte Klassen
- T7 - T10; T11, T12: neu gebildete Klassen
- a1 - a8: Ausgangsgröße
- A_{A} - A_{D}: Sets der Eingangs-Zugehörigkeitsfunktion A(vₑ)
- B_{A}, B_{B}: Sets der Eingangs-Zugehörigkeitsfunktion B(r)
- Cₐ₁ - Cₐ₈: Sets der Ausgangs-Zugehörigkeitsfunktion C(a)
- Rₐ₁ - Rₐ₈: Schnittpunkt von Klassen, Regeln
- b₁ - b₄: Bereich
- t₂, t₃: Trefferquote
- B2, B3: freier Bereich

## Patentansprüche

1. Verfahren zur Abstandsregelung für ein Fahrzeug, bei dem zumindest in Abhängigkeit der Fahrgeschwindigkeit des Fahrzeuges ein Sollabstand zu einem vorausfahrenden Fahrzeug mittels einer Einrichtung zur Berechnung des Sollabstandes ermittelt wird, wobei die Einrichtung (1) in ihrem Übertragungsverhalten an das individuelle Fahrverhalten eines Fahrzeugführers derart adaptiert wird, daß die individuelle Folgezeit des Fahrzeugführers zum vorausfahrenden Fahrzeug über die Ermittlung des Sollabstandes (aₛₒₗₗ) eingehalten wird, wobei die Einrichtung (1) einen Fuzzy-Regler mit der Fahrgeschwindigkeit (vₑ) als Eingangsgröße und mindestens einer weiteren Eingangsgröße (r) und dem Sollabstand (aₛₒₗₗ) als Ausgangsgröße darstellt, welcher Eingangs-Zugehörigkeitsfunktionen (A(ve), B(r)) mit denen Wahrheitswerte (µ(vₑ), µ(r)) linguistischer Werte zumindest für die Eingangsgrößen (vₑ, r) ermittelt werden, ein Regelwerk (R), in welchem aus den Wahrheitswerten für die Eingangsgrößen Wahrheitswerte (µ_{c}(a)) für den Sollabstand (aₛₒₗₗ) bestimmt werden, und einer Ausgangs-Zugehörigkeitsfunktion (C(a)) mit welcher aus den Wahrheitswerten des Sollabstandes der einzuregelnde Sollabstand (aₛₒₗₗ) bestimmt wird, aufweist, **dadurch gekennzeichnet, daß** über den Wertebereich (wᵥₑ, wᵣ) der Eingangsgrößen (vₑ, r) eine Anzahl von Klassen (T1 - T4; T5, T6) festgelegt wird, in einer Lemphase auftretende Wertekombinationen der Eingangsgrößen (vₑ, r) und des Abstandes (a) erfaßt werden in Abhängigkeit der erfaßten Wertekombinationen zur Erzeugung aktueller Klassen (T7 - 12) die zwar festgelegten Klassen verändert, entfernt und/oder neue Klassen-erzeugt werden und in Abhängigkeit der aktuellen Klassen (T7 - T10; T11, T12) angepaßte Zugehörigkeitsfunktionen und angepaßte Regeln des Regelwerkes erzeugt werden.

2. Verfahren nach Anspruch 1, **dadurch gekennzeichnet, daß** die Anzahl und die Lage der Klassen (T1 - T4; T5, T6) in Abhängigkeit der bestehenden Eingangs-Zugehörigkeitsfunktionen (A(vₑ), B(r)) festgelegt werden.

3. Verfahren nach Anspruch 1 oder 2, **dadurch gekennzeichnet, daß** im Wertebereich (wᵥₑ, wᵣ) der Eingangsgrößen (vₑ, r) um die Klassen (T1 - T4; T5, T6) Bereiche (b₁ - b₄) festgelegt werden, in denen keine neuen Klassen gebildet werden, die aufgetretenen Wertekombinationen der Eingangsgrößen (vₑ, r) und des Abstandes (a), die einen der Bereiche (b1 - b4), jedoch keine der Klassen (T1 - T4) treffen, auf die benachbarten Klassen entsprechend einer Wichtung verteilt und die diese Klassen (T2, T3) umgebenden Bereiche (b₂, b₃) entsprechend der so erzeugten Treffer (t₂, t₃) von Wertekombinationen in ihrer Breite verändert werden, wodurch freie Bereiche (B2, B3) entstehen, in welchen bei Eintreffen einer Wertekombination eine neue Klasse (T7 - T10; T11, T12) gebildet wird.

4. Verfahren nach einem der vorangegangenen Ansprüche, **dadurch gekennzeichnet, daß** bei Erzeugung einer neuen Klasse eine bestehende Klasse (T1 - T4; T5, T6) entfernt wird, wobei die ihr bereits zugeordneten Wertekombinationen der Eingangsgrößen (ve, r) und des Abstandes (a) auf die benachbarten Klassen verteilt werden und diese Klassen entsprechend der ihnen zugeordneten Wertekombinationen der Eingangsgrößen (ve, r) und des Abstandswertes (a) verändert werden.

5. Verfahren nach einem der vorangegangenen Ansprüche, **dadurch gekennzeichnet, daß** nach der Adaption der Klassen jede Klasse (T7 - T10; T11, T12) mindestens eine Stützstelle eines Sets (A_{A}- A_{D}; B_{A}, B_{B}) der Eingangs-Zugehörigkeitsfunktion (A(vₑ), B(r)) bildet.

6. Verfahren nach einem der vorangegangenen Ansprüche, **dadurch gekennzeichnet, daß** durch die Schnittpunkte der Klassen (T7 - T10; T11, T12) die Regeln (Rₐ₁ - Rₐ₈) des Fuzzy-Reglers gebildet werden.

7. Verfahren nach einem der vorangegangenen Ansprüche, **dadurch gekennzeichnet, daß** der Abstandswert (a₁ - a₁₄) der Schnittpunkte der Klassen (T7 - T10; T11, T12) eine Stützstelle der Sets (Cₐ₁ - Cₐ₈) der Ausgangs-Zugehörigkeitsfunktionen (C(a)) bildet.

8. Verfahren nach einem der vorangegangenen Ansprüche, **dadurch gekennzeichnet, daß** in Bereichen des Wertebereiches (wᵥₑ, wᵣ) der Eingangsgrößen (vₑ, r), für die keine Wertekombinationen der Eingangsgrößen (vₑ, r) und des Abstandes (a) während der Lernphase erfaßt werden und/oder Klassen mit extrem herausragenden Wertekombinationen aufweisen, eine lokale und/oder globale Interpolation durchgeführt wird.

9. Verfahren nach einem der vorangegangenen Ansprüche, **dadurch gekennzeichnet, daß** die Adaption der Einrichtung (1) an das individuelle Fahrverhalten eines Fahrzeugführers während eines Operatorbetriebes erfolgt.

10. Verfahren nach einem der vorangegangenen Ansprüche, **dadurch gekennzeichnet, daß** als weitere Eingangsgröße der Einrichtung (1) der vorherrschende Reibwert (r) und/oder eine Größe für die vorherrschenden Sichtverhältnisse verwendet wird.

11. Vorrichtung zur Durchführung des Verfahrens nach einem der Ansprüche 1 bis 10.

## Claims

1. Method for distance control for a vehicle, in which, at least as a function of the driving speed of the vehicle, an intended distance to a vehicle travelling in front is determined by means of a device for calculating the intended distance, in which the device (1) is adapted in its transfer function to the individual driving behaviour of a vehicle driver in such a way that the individual following time of the vehicle driver to the vehicle travelling in front is maintained via the determination of the intended distance (aₛₒₗₗ), in which the device (1) constitutes a fuzzy controller with the driving speed (vₑ) as input variable and at least one further input variable (r) and with the intended distance (aₛₒₗₗ) as output variable, which controller has input membership functions (A(vₑ), B(r)) with which truth values (µ(vₑ), µ(r)) of linguistic values are determined at least for the input variables (vₑ, r), has a control mechanism (R) in which truth values (µ_{c}(a)) for the intended distance (aₛₒₗₗ) are determined from the truth values for the input variables, and has an output membership function (C(a)) with which the intended distance (aₛₒₗₗ) which is to be adjusted is determined from the truth values of the intended distance, **characterized in that**, over the value range (wᵥₑ, wᵣ) of the input variables (vₑ, r), a number of classes (T1 - T4; T5, T6) is defined, in a learning phase value combinations of the input variables (vₑ, r) and of the distance (a) which occur are registered, the previously defined classes are altered, removed and/or new classes are generated as a function of the registered value combinations to generate current classes (T7 - 12) and, as a function of the current classes (T7 - T10; T11, T12), adapted membership functions and adapted rules of the control mechanism are generated.

2. Method according to Claim 1, **characterized in that** the number and the position of the classes (T1 - T4; T5, T6) are defined as a function of the existing input membership functions (A(vₑ), B(r)).

3. Method according to Claim 1 or 2, **characterized in that**, in the value range (wᵥₑ, wᵣ) of the input variables (vₑ, r), areas (b₁ - b₄) are defined around the classes (T1 - T4; T5, T6), in which areas no new classes are formed, the value combinations of the input variables (Vₑ, r) and the distance (a) which occur and which fall in one of the areas (b₁ - b₄) but none of the classes (T1 - T4) are distributed to the adjacent classes in accordance with a weighting, and the areas (b₂, b₃) surrounding these classes (T2, T3) are altered in width in accordance with the hits (t₂, t₃) of value combinations thus generated, as a result of which free areas (B2, B3) are produced in which, if a value combination arrives, a new class (T7 - T10; T11, T12) is formed.

4. Method according to one of the preceding claims, **characterized in that**, when generating a new class, an existing class (T1 - T4; T5, T6) is removed, the value combinations of the input variables (vₑ, r) and of the distance (a) already assigned to the said class being distributed to the adjacent classes and these classes being altered in accordance with the value combinations of the input variables (vₑ, r) and of the distance value (a) assigned to them.

5. Method according to one of the preceding claims, **characterized in that**, following the adaptation of the classes, each class (T7 - T10; T11, T12) forms at least one reference point of a set (A_{A} - A_{D}; B_{A}, B_{B}) of the input membership function (A(vₑ), B(r)).

6. Method according to one of the preceding claims, **characterized in that** the rules (Rₐ₁ - Rₐ₈) of the fuzzy controller are formed by the points of intersection of the classes (T7 - T10; T11, T12).

7. Method according to one of the preceding claims, **characterized in that** the distance value (a₁ - a₁₄) of the points of intersection of the classes (T7 - T10; T11, T12) forms a reference point of the sets (Cₐ₁ - Cₐ₈) of the output membership functions (C(a)).

8. Method according to one of the preceding claims, **characterized in that**, in areas of the value range (wᵥₑ, wᵣ) of the input variables (vₑ, r) for which no value combinations of the input variables (vₑ, r) and of the distance (a) were registered during the learning phase and/or which have classes with extremely prominent value combinations, a local and/or global interpolation is carried out.

9. Method according to one of the preceding claims, **characterized in that** the adaptation of the device (1) to the individual driving behaviour of a vehicle driver is carried out during an operator operation.

10. Method according to one of the preceding claims, **characterized in that** the prevailing friction (r) and/or a variable for the prevailing visibility conditions is used as the further input variable of the device (1).

11. Device for implementing the method according to one of Claims 1 to 10.

## Revendications

1. Procédé de régulation de la distance pour un véhicule, dans lequel on détermine en fonction de la vitesse du véhicule, au moins une distance de consigne jusqu'à un véhicule précédent au moyen d'un dispositif de calcul de la distance de consigne, le dispositif (1) étant adapté dans son comportement de transmission au comportement de conduite individuel d'un conducteur de véhicule de telle sorte que la durée individuelle de l'écart du conducteur du véhicule jusqu'au véhicule précédent est maintenue par la détermination de la distance de consigne (aₛₒₗₗ), le dispositif (1) présentant un régulateur flou avec la vitesse de circulation (vₑ) comme grandeur d'entrée et au moins une autre grandeur d'entrée (r) et la distance de consigne (aₛₒₗₗ) comme grandeur de sortie dont les fonctions d'appartenance d'entrée (A(vₑ), B(r)) sont déterminées avec les valeurs de vérité (µ(vₑ), µ(r)) des valeurs linguistiques au moins pour les valeurs d'entrée (vₑ, r), un système de régulation (R) dans lequel on définit des valeurs de vérité (µ_{c}(a)) pour la distance de consigne (aₛₒₗₗ) à partir des valeurs de vérité pour les grandeurs d'entrée, et une fonction d'appartenance de sortie (C(a)) permettant de définir la distance de consigne (aₛₒₗₗ) à réguler à partir des valeurs de vérité de la distance de consigne, **caractérisé en ce que** sur le domaine des valeurs (wᵥₑ, wᵣ) des grandeurs d'entrée (vₑ, r) on détermine un certain nombre de classes (T1-T4 ; T5, T6) à partir des combinaisons de valeurs des grandeurs d'entrée (vₑ, r) et de la distance (a) survenant dans une phase d'apprentissage, on modifie les classes déterminées précédemment en fonction des combinaisons de valeurs enregistrées pour la création des classes actuelles (T7-T12), on élimine et/ou on génère de nouvelles classes et on crée des fonctions d'appartenance ajustées et des règles ajustées du système de régulation en fonction des classes actuelles (T7-T10 ; T11, T12).

2. Procédé selon la revendication 1, **caractérisé en ce que** le nombre et la position des classes (T1-T4 ; T5, T6) sont déterminés en fonction des fonctions d'appartenance d'entrée (A(vₑ), B(r)) existantes.

3. Procédé selon la revendication 1 ou 2, **caractérisé en ce que** dans le domaine des valeurs (wᵥₑ, wᵣ) des grandeurs d'entrée (vₑ, r) on détermine autour des classes (T1-T4 ; T5, T6) les domaines (b₁-b₄) dans lesquels on ne forme pas de nouvelles classes, les combinaisons de valeurs des grandeurs d'entrée (vₑ, r) apparues et de la distance (a) touchant un des domaines (b₁-b₄) mais aucune des classes (T1-T4) étant réparties dans les classes adjacentes en fonction d'une pondération et les domaines (b2, b3) entourant ces classes (T2, T3) étant modifiés dans leur largeur en fonction des coïncidences (t2, t3) ainsi obtenues à partir des combinaisons de valeurs, ce qui forme des domaines libres (B2, B3) dans lesquels une nouvelle classe (T7-T10 ; T11, T12) est formée lors de l'arrivée d'une combinaison de valeurs.

4. Procédé selon une des revendications précédentes, **caractérisé en ce que** lors de la création d'une nouvelle classe, on élimine une classe (T1-T4 ; T5, T6) existante, les combinaisons de valeurs des grandeurs d'entrée (vₑ, r) et de la distance (a) qui lui sont déjà attribuées étant réparties dans les classes adjacentes et ces classes étant modifiées en fonction des combinaisons de valeurs des grandeurs d'entrée (vₑ, r) et de la valeur de la distance (a) qui leur sont attribuées.

5. Procédé selon une des revendications précédentes, **caractérisé en ce qu'**après l'adaptation des classes, chaque classe (T7-T10 ; T11, T12) forme au moins un point d'appui d'une série (A_{A}-A_{D} ; B_{A}, B_{B}) des fonctions d'appartenance d'entrée (A(vₑ), B(r)).

6. Procédé selon une des revendications précédentes, **caractérisé en ce que** les points d'intersection des classes (T7-T10 ; T11, T12) permettent de former les règles (Rₐ₁-Rₐ₈) du régulateur flou.

7. Procédé selon une des revendications précédentes, **caractérisé en ce que** la valeur de distance (a₁-a₁₄) des points d'intersection des classes (T7-T10 ; T11, T12) forme un point d'appui des séries (Cₐ₁-Cₐ₈) des fonctions d'appartenance de sortie (C(a)).

8. Procédé selon une des revendications précédentes, **caractérisé en ce que** dans des domaines du domaine de valeurs (wᵥₑ, wᵣ) des grandeurs d'entrée (vₑ, r) pour lesquelles on n'enregistre aucune combinaison des valeurs des grandeurs d'entrée (vₑ, r) et de la distance (a) pendant la phase d'apprentissage et/ou qui présentent des classes avec des combinaisons de valeurs qui dépassent de manière extrême, on effectue une interpolation locale et/ou globale.

9. Procédé selon une des revendications précédentes, **caractérisé en ce que** l'adaptation du dispositif (1) au comportement de conduite individuel d'un conducteur de véhicule se produit pendant une utilisation d'un opérateur.

10. Procédé selon une des revendications précédentes, **caractérisé en ce qu'**on utilise comme autre grandeur d'entrée du dispositif (1), la valeur de frottement (r) existante et/ou une grandeur pour les conditions de visibilité existantes.

11. Dispositif pour l'exécution du procédé selon une des revendications 1 à 10.
